# EUROPEAN PATENT SPECIFICATION

(11) **EP 2 992 575 B1**
(45) Date of publication and mention of the grant of the patent: **29.04.2020**
(21) Application number: 14723408.2
(22) Date of filing: 06.05.2014
(51) Int. Cl.: H01S 3/067, H01S 3/30, H01S 3/16, H01S 3/17, H01S 3/094

(54) **OPTICAL FIBER AMPLIFIER**
GLASFASERVERSTÄRKER
AMPLIFICATEUR DE FIBRE OPTIQUE

(30) Priority: 03.05.2013 GB 201308096; 03.05.2013 US 201361819165 P
(43) Date of publication of application: 09.03.2016
(73) Proprietor: Atla Lasers AS, 7079 Trondheim (NO)
(72) Inventor: DVOYRIN, Vladislav Vladimirovich, N-7042 Trondheim (NO); SOROKINA, Irina T., A-1220 Vienna (AT)
(74) Representative: Dehns
(86) International application number: PCT/EP2014/059252
(87) International publication number: WO 2014/177724

(56) References cited:
- WO-A2-2007/061732
- US-A1- 2002 168 161
- SWIDERSKI J ET AL: "Mid-infrared supercontinuum generation in a single-mode thulium-doped fiber amplifier", LAS. PHYS. LETT., vol. 10, 035105, 31 January 2013 (2013-01-31), pages 1-6, XP002726096, cited in the application
- YANG W Q, ZHANG B, HOU J, XIAO R, SONG R, LIU Z J: "Gain-switched and mode-locked Tm/Ho-codoped 2µm fiber laser for mid-IR supercontinuum generation in a Tm-doped fiber amplifier", LASER PHYSICS LETTERS, vol. 10, 045106, 27 February 2013 (2013-02-27), pages 1-5, XP002726097, DOI: 10.1088/1612-2011/10/4/045106
- JIHONG GENG ET AL: "High-spectral-flatness mid-infrared supercontinuum generated from a Tm-doped fiber amplifier", APPLIED OPTICS, OPTICAL SOCIETY OF AMERICA, WASHINGTON, DC; US, vol. 51, no. 7, 23 February 2012 (2012-02-23), pages 834-840, XP001573910, ISSN: 0003-6935, DOI: 10.1364/AO.51.000834 [retrieved on 2012-02-23]
- A.S. KURKOV ET AL: "Mid-IR supercontinuum generation in Ho-doped fiber amplifier", LASER PHYSICS LETTERS, vol. 8, no. 10, 28 October 2011 (2011-10-28), pages 754-757, XP055124389, ISSN: 1612-2011, DOI: 10.1002/lapl.201110062
- M. N. ISLAM ET AL: "Broad bandwidths from frequency-shifting solitons in fibers", OPTICS LETTERS, vol. 14, no. 7, 1 April 1989 (1989-04-01), pages 370-372, XP055124577, ISSN: 0146-9592, DOI: 10.1364/OL.14.000370
- Ojas P Kulkarni ET AL: "Supercontinuum generation from ~1.9 to 4:5 [mu]m in ZBLAN fiber with high average power generation beyond 3:8 [mu]m using a thulium-doped fiber amplifier", J.Opt.Soc.Am. B, vol. 28, no. 10 26 September 2011 (2011-09-26), XP055123908, Retrieved from the Internet: URL:http://www.opticsinfobase.org/DirectPD FAccess/C7ABBDE6-CDC2-CB8C-EC6AEC93036AF48 5_222727/josab-28-10-2486.pdf?da=1&id=2227 27&seq=0&mobile=no [retrieved on 2014-06-18]
- JIE JIANG ET AL: "Tunable coherent Raman soliton generation with a Tm-fiber system", LASERS AND ELECTRO-OPTICS (CLEO), LASER SCIENCE TO PHOTONIC APPLICATIONS)-CLEO: 2011 - LASER SCIENCE TO PHOTONIC APPLICATIONS- 1-6 MAY 2011, BALTIMORE, MD, USA, IEEE, US, 1 May 2011 (2011-05-01), pages 1-2, XP031891580, ISBN: 978-1-4577-1223-4

## Description

The present invention relates to an optical system comprising a fiber amplifier, and in particular, an optical system for efficient generation of ultra-short high-energy pulses and/or high-power optical supercontinuum.

Supercontinuum radiation is a phenomenon whereby narrowband light propagating through a non-linear medium is transformed into a signal with very broad spectrum. Optical fibers are a natural choice of non-linear media.

Jie Jiang et al., "Tunable coherent Raman soliton generation with a Tm-fiber system", CLEO, pages 1-2, 1 May 2011, demonstrates wavelength tunable coherent Raman soliton generation.

US 2002/0168161 A1 teaches a source of optical pulses and methods of generating optical pulses, particularly tunable pulses, by use of the Soliton-self-frequency shifting effect in an optical amplifier based on doped holey fiber.

J. Swiderski and M. Michalska, "Mid-infrared supercontinuum generation in a single-mode thulium-doped fiber amplifier" *Laser Phys. Lett.* 10 (2013) 035105 (6pp), discloses a supercontinuum source comprising thulium-doped fibers. The wavelength of the output spectrum of the supercontinuum source extends from 1.75 to 2.7 µm. The method disclosed therein is as follows. Firstly, nanosecond seed pulses are amplified in a cascade of erbium and erbium:ytterbium fiber amplifiers. The amplified pulses are then passed into a single-mode fiber and are shifted to about 2.4 µm using soliton self-frequency shifting. The spectrum is extended above 2.4 µm by using a core-pumped thulium-doped fiber amplifier, and that radiation is then amplified in another section of thulium-doped fiber amplifier to produce the output supercontinuum. Increasing the pump power broadens the spectrum of the supercontinuum.

It will be appreciated that the above system is rather complex, and it would thus be advantageous to provide a simpler and more versatile fiber amplifier.

According to the invention, there is provided an optical system as defined in claim 1, and a method as defined in claim 11 of operating an optical system. Embodiments are set out in the dependent claims.

The optical system comprises a fiber amplifier comprising an optically active doped fiber; a source of seed pulses; and a pump source, wherein the doped fiber is doped with one or more active element(s) selected such that the seed pulses are amplified in intensity; the doped fiber has a negative (anomalous) group velocity dispersion in the region from the wavelength of the seed pulses to a threshold wavelength at which the magnitude of the optical loss of the doped fiber is greater than a gain due to stimulated Raman scattering, so that due to stimulated Raman scattering, formation of a Raman soliton occurs, the Raman soliton is further shifted in the wavelength domain, and the shifting of the soliton in the wavelength domain is stopped at the threshold wavelength; the fiber is doped with thulium (Tm), the fiber has a negative group velocity dispersion in the region of 1.8 to 2.6 µm; the pump source is arranged to pump at a wavelength from 0.77 to 0.82 µm; the source of seed pulses provides pulses having wavelengths from 1.8-2.1 µm; the duration of the seed optical pulses is limited to less than 100 ps; the threshold wavelength is longer than the wavelength of the seed pulses; and the optical system is operable to generate a series of spectrally separated soliton pulses in the region from the seed pulse wavelength to 2.6 µm.

By virtue of the invention, in use, formation of a Raman soliton occurs due to stimulated Raman scattering. The Raman soliton is then shifted in the wavelength domain. The shifting of the Raman soliton is stopped at the threshold wavelength.

Thus, there is disclosed herein an optical system for outputting an optical output comprising: a fiber amplifier comprising an optically active doped fiber; a source of seed pulses; and a pump source; wherein the doped fiber has a negative (anomalous) group velocity dispersion in the region from the wavelength of the seed pulse to the desirable threshold wavelength and it is doped with one or more active element(s) selected such that the seed pulse is amplified in intensity so that due to stimulated Raman scattering a formation of a Raman soliton occurs and a further shift of the soliton in the wavelength domain which is preferably stopped at a threshold wavelength at which the magnitude of the optical loss of the doped fiber is greater than a gain due to the stimulated Raman scattering.

By virtue of the present invention it is possible to produce as an output of the optical system an optical supercontinuum and/or a high-energy pulse shorter than the seed pulse and preferably comprising the predominant part of the output amplifier radiation without spectral filtering and spectrally shifted to the longer wavelength direction.

In preferred embodiments, the optical system is operable in a first and second mode, wherein in the first mode the optical system is operable to generate as the output a high-energy pulse shorter than the seed pulse and comprising the predominant part of the output amplifier radiation without spectral filtering and spectrally shifted to the longer wavelength direction, and wherein in the second mode the optical system is operable to generate as the output an optical supercontinuum. In such embodiments, it is preferably possible to change between the first operational mode and the second operational mode by changing at least one of the duration or intensity of the seed pulses, or changing the pump rate.

The duration of the seed optical pulses is less than 100 ps, in order to provide more efficient generation of the Raman soliton.

Preferably, the doped fiber has a steeply increasing optical loss at the threshold wavelength, the threshold wavelength being longer than the wavelength of the seed pulse. The magnitude of the optical loss is preferably chosen to overcome the gain due to stimulated Raman scattering at the peak intensity of the desired output pulse.

Preferably the fiber is silica-based. Alternatively, the fiber may be a germanate glass fiber, or a fiber with high (preferably >50%) germanium oxide content, or any other fiber with negative (anomalous) dispersion in the desired wavelength range, including but not limited to fluorozirconate glasses (e.g. ZBLAN), phosphate glasses or chalcogenide glasses.

The doped fiber may be doped with at least one element producing optical loss at the threshold wavelength. The fiber is doped with thulium. Preferably the fiber is doped with at least one element chosen from the rare-earth group, for example Nd, Er, Yb and Ho.

Thulium/holmium-doped fiber may be used in order to achieve broader gain which is preferable for supercontinuum generation.

Holmium-doped fiber may be used in order to decrease the spectral band in order to provide more efficient energy transfer to the soliton comprising the most part of the amplifier output energy. When holmium-doped fiber is used, the pump wavelengths are preferably chosen from the regions of 1.14-1.16 µm or 2-2.1 µm.

However, in accordance with the invention, the fiber is doped with thulium.

Therefore, there is provided an optical system comprising: a thulium doped fiber amplifier; a pump source arranged to pump at a wavelength from 0.77 to 0.82 µm; and a source of seed pulses, the seed pulses having wavelengths from 1.8-2.1 µm.

By means of the invention is it possible to generate a series of spectrally separated soliton pulses in the region from the seed pulse wavelength to 2.6 µm. It is also possible to generate (in a first mode of operation) a soliton pulse in the 2.2-2.8 µm region comprising the predominant part of the amplifier output radiation, and (in a second mode of operation) supercontinuum radiation from 1.8-2.6 µm. Changing from one operational mode to another may be achieved by changing the input parameters of the pump source and seed pulses.

Thus there is disclosed herein a fiber laser comprising an amplification chain for amplification of optical pulses, which has at least one amplifier cascade realized with an optical fiber doped with an optically active element, the doped fiber having a steep rise of an optical loss at a wavelength longer than that of the seed pulse and having a negative (anomalous) group velocity dispersion in the wavelength region from the seed spectral position to the optical loss edge (referred to also as threshold wavelength, or absorption edge). The optical loss value is chosen so that the optical loss overcomes the Raman gain at the desired peak intensity of the output pulse.

There is further disclosed a fiber laser comprising an amplification chain for amplification of seed pulses with spectral intensity maximum in the region of 1.8-2.1 µm, which has at least one amplifier cascade realized on a thulium-doped optical glass fiber with a negative group velocity dispersion in the region of 1.8-2.6 µm pumped at the wavelengths chosen from the region of 0.77-0.82 µm. With this configuration, it is possible to generate an ultra-short soliton pulse in the spectral range of 2.2-2.5 µm which carries the predominant part of the output amplifier radiation without applying a spectral filtering in any form. Moreover, it is possible to generate a series of spectrally separated soliton pulses in the spectral range from the seed laser wavelength up to 2.6 µm. Also, the amplifier can act as a supercontinuum light source in covering the region of 1.8-2.6 µm.

The optical loss may be natural or introduced by several techniques, such as cut-off of a fundamental mode in a special fiber or doping with chemical elements or introducing bending losses in order to obtain a sharp absorption edge at a desirable wavelength.

The operation principle of the amplifier is the shifting of the pulse in the wavelength domain due to stimulated Raman scattering which is stopped at a certain spectral point owing to the optical loss overcoming the Raman gain. At a certain threshold pump rate the amplifier produces one or a series of the Raman solitons from each input pulse, whereas the first Raman soliton is spectrally shifted with respect to the pulse, the second Raman soliton is spectrally shifted with respect to the first Raman soliton, and so on.

In a thulium-doped fiber amplifier, amplification in the ³H₄-³H₅ electronic transition band also plays a part in the wavelength shifting of the pulse.

Depending on the amplifier parameters (fiber composition, core profile, spectral dependence of the light propagation constant, input seed duration, shape and intensity, polarization, bending losses, pump rate, and pump distribution along the fiber), the pulse and the Raman solitons can be completely or partially separated in time.

In the case that the Raman solitons are completely separated in time (the first mode of operation of the laser), it is possible to generate at a certain pump rate an optical supercontinuum covering the whole spectral region between the input seed and the absorption edge. Further increase in the pump rate will result in the increase of the power of the supercontinuum without broadening of its spectrum.

In the case that the Raman solitons are partially separated in time (the second mode of operation of the laser), the seed pulse will amplify the first Raman soliton at the expense of its own energy, the first Raman soliton will amplify the second Raman soliton, and so on. The energy transfer will stop at the last Raman soliton whose spectral position is determined by the position of the absorption edge. This Raman soliton will thus accumulate the energy supplied by the pump.

By changing the pump rate, pump distribution, polarization and seed parameters it is possible to switch between the two described operational modes of one and the same apparatus.

The technical result is the realization of a high-brightness supercontinuum, and a high energy ultra-short seed pulse accumulating the predominant part of the amplifier output spectral energy, and a device which can switch between these two operational modes.

The advantage over the prior art, where the increase of the total supercontinuum power leads to the increase of its spectral area rather than increase in its spectral power density (or, brightness), is that the present invention allows to accumulate the energy in the spectral band of interest without its spectral broadening, or, in other words, to increase the spectral brightness of the supercontinuum source.

Another advantage is the realization of a high-energy pulse comprising the predominant part of the laser output radiation.

A preferred embodiment of the invention will now be described by way of example only and with reference to the accompanying drawings in which:
Figure 1 shows an optical system in which the present invention can be implemented; and
Figure 2 shows a supercontinuum output spectrum generated by an optical system according to the present invention.

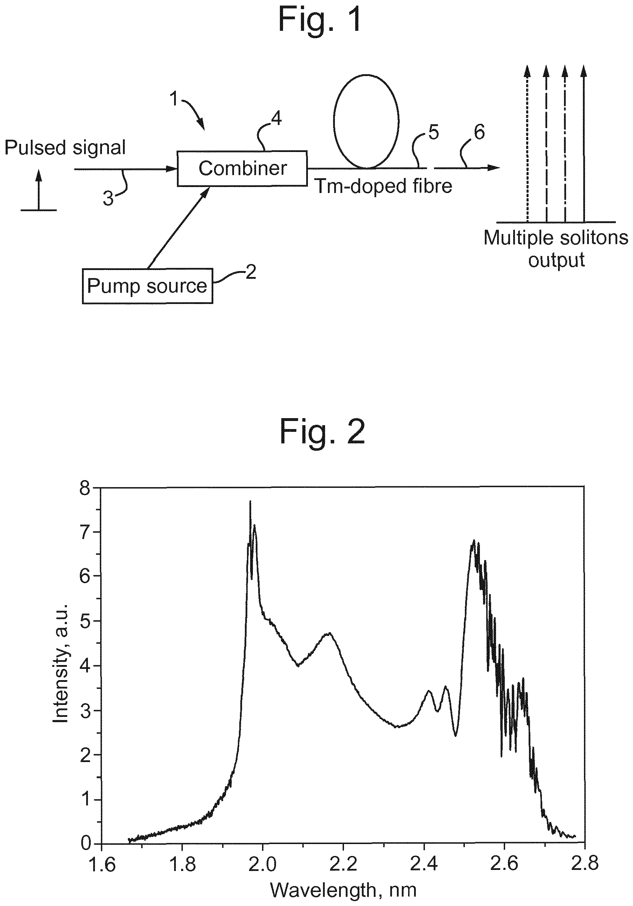

The optical system 1 of Figure 1 comprises a pump source 2, a source of seed pulses (seed source) for providing seed pulses 3, a combiner 4 and a fiber amplifier 5.

In operation, the pump source 2 provides pump radiation to the combiner 4, where it is coupled with seed pulses 3 from the seed pulse source. The multiplexed output from the combiner 4 is then input to the fiber amplifier 5, and is output as output pulses 6.

Figure 2 shows a supercontinuum output spectrum generated by an optical system according to the present invention. The fiber amplifier used was a thulium doped fiber amplifier pumped with pump pulses with a wavelength of 795 nm. The wavelength of the seed pulse was 1970 nm.

The preferred embodiment uses a silica-based thulium-doped optical fiber with OH- groups introduced into the fiber during manufacturing. OH- groups will be present to some extent in most optical fibers, but normally their concentration is reduced as much as possible. Leaving OH- in the fiber to some extent allows controlling the cut-off wavelength and loss (i.e., the more OH-, the shorter the cut-off wavelength and the higher the losses). Thus it is worth noting that OH- groups may exist in different optical glass fibers and thus can play the role providing the requisite optical loss, especially the intense absorption peak situated at the wavelength of 2.7-2.8 µm depending on the specific glass composition.

A supercontinuum or the ultra-short pulses in the wavelength region of 1.8-2.7 µm can be generated by such an optical fiber. Alternatively, a germanate glass fiber or a fiber with high (preferably >50%) germanium oxide content can provide the extension of this spectral range up to 2.8 µm. The silica-based thulium-doped optical fiber is seeded by seed pulses in the region of 1.8-2.1 µm. The preferable pump method is clad-pumping. Clad pumping is important for reaching high output powers and for using direct diode-pumping which is more economical. The pump wavelength is selected from the regions of 0.77-0.82 µm, 1.5-1.65 µm, and 1.18-1.21 µm. Core-pumping method, or any combination of the mentioned above pump possibilities can be used as well. It is possible to generate an ultra-short soliton pulse in the spectral range of 2.2-2.7 µm which carries the predominant part of the output amplifier radiation without applying a spectral filtering in any form.

The invention can be used in industrial and scientific applications such as fine material processing, oil and gas sensing, environment monitoring, and medicine.

The advantage of the amplifier is its natural simplicity and reliability as compared to the existing analogues.

## Claims

1. An optical system comprising:
a fiber amplifier (5) comprising an optically active doped fiber;
a source of seed pulses (3); and
a pump source (2), wherein
the doped fiber is doped with one or more active elements selected such that the seed pulses (3) are amplified in intensity;
the doped fiber has a negative group velocity dispersion in the region from the wavelength of the seed pulses (3) to a threshold wavelength at which the magnitude of the optical loss of the doped fiber is greater than a gain due to stimulated Raman scattering, so that in use due to stimulated Raman scattering, formation of a Raman soliton occurs, the Raman soliton is further shifted in the wavelength domain, and the shifting of the soliton in the wavelength domain is stopped at the threshold wavelength;
the fiber is doped with thulium Tm,
the fiber has a negative group velocity dispersion in the region of 1.8 to 2.6 µm;
the pump source (2) is arranged to pump at a wavelength from 0.77 to 0.82 µm;
the source of seed pulses (3) provides pulses having wavelengths from 1.8-2.1 µm;
the duration of the seed optical pulses is limited to less than 100 ps;
the threshold wavelength is longer than the wavelength of the seed pulses (3); and
the optical system is operable to generate a series of spectrally separated soliton pulses in the region from the seed pulse wavelength to 2.6µm.

2. An optical system according to claim 1, wherein the doped fiber has a steeply increasing optical loss at the threshold wavelength.

3. An optical system according to claim 1 or 2, wherein the magnitude of said optical loss is chosen to overcome the gain due to stimulated Raman scattering at the desired peak intensity of the Raman soliton.

4. An optical system according to any preceding claim, operable in a first and second mode,
wherein in the first mode the optical system is operable to generate as its output a high-energy pulse shorter than the seed pulse and comprising the predominant part of the output amplifier radiation without spectral filtering and spectrally shifted to the longer wavelength direction,
and wherein in the second mode the optical system is operable to generate as its output an optical supercontinuum.

5. An optical system according to claim 4, comprising a controller for controlling the source of seed pulses (3), preferably wherein the controller is configured to change at least one of the duration or intensity of the seed pulses (3) in order to change between the first operational mode and the second operational mode.

6. An optical system according to claim 4 or 5, further comprising a controller for controlling the pump source (2), wherein the controller is configured to change the pump rate in order to change between the first operational mode and the second operational mode.

7. An optical system according to any preceding claim, wherein the doped fiber is doped with at least one element producing optical loss at the threshold wavelength, or wherein the threshold wavelength is provided by cutting off a fundamental mode or introducing bending losses.

8. An optical system according to any preceding claim, wherein the fiber is silica-based.

9. An optical system according to any of claims 1 to 7, wherein the fiber is a germanate glass fiber or a fiber with a germanium oxide content of greater than 50%.

10. An optical system according to claim 1, operable in a first mode to generate a soliton pulse in the 2.2-2.8 µm region comprising the predominant part of the amplifier output radiation and in a second mode to generate supercontinuum radiation from 1.8-2.6 µm, wherein it is possible to change from one operational mode to another by changing the input parameters of the pump source (2) and seed pulses (3).

11. A method of operating an optical system comprising:
providing a fiber amplifier (5) having an optically active doped fiber;
seeding the fiber amplifier with seed pulses (3); and
pumping the fiber amplifier (5); wherein
the doped fiber is doped with one or more active element(s); and the doped fiber has a negative group velocity dispersion in the region from the wavelength of the seed pulse to a desirable threshold wavelength, so that in use due to stimulated Raman scattering, formation of a Raman soliton occurs, the Raman soliton is further shifted in the wavelength domain, and the shifting of the soliton in the wavelength domain is stopped at the threshold wavelength at which the magnitude of the optical loss of the doped fiber is greater than a gain due to the stimulated Raman scattering, and wherein
providing the fiber amplifier (5) is providing a thulium-doped fiber amplifier, the thulium-doped fiber amplifier (5) having a negative group velocity dispersion in the region of 1.8 to 2.6 µm;
seeding the fiber amplifier is seeding the thulium-doped fiber amplifier with seed pulses (3) having the wavelengths from 1.8-2.1 µm;
pumping the fiber amplifier (5) is pumping the thulium-doped fiber amplifier at any wavelengths from 0.77-0.82 µm;
the duration of the seed optical pulses is limited to less than 100 ps;
the threshold wavelength is longer than the wavelength of the seed pulses (3); and
the optical system is operable to generate a series of spectrally separated soliton pulses in the region from the seed pulse wavelength to 2.6µm.

12. A method according to claim 11 comprising generating a soliton pulse with a wavelength of 2.2-2.5 µm, such that the generated soliton pulse carries the predominant part of the amplifier output power; and preferably comprising generating the series of spectrally separated soliton pulses in the spectral region from the seed pulse wavelength to 2.6 µm.

13. A method according to claim 11, comprising generating supercontinuum radiation covering the region of 1.8-2.6 µm.

14. A method according to claim 11, comprising generating the series of spectrally separated soliton pulses in the spectral region from the seed pulse wavelength to 2.6 µm in a first mode of operation, and in a second mode of operation, generating supercontinuum radiation covering the region of 1.8-2.6 µm; preferably wherein in the first mode of operation, the series consists of at least one soliton pulse in the region of 2.2-2.5 µm carrying the predominant part of the amplifier output power; and/or preferably wherein the operational mode is changed between the two modes by change of the input parameters of pump and seed.

## Patentansprüche

1. Optisches System, umfassend:
einen Faserverstärker (5), der eine optisch aktive dotierte Faser umfasst;
eine Quelle von Saatimpulsen (3); und
eine Pumpquelle (2), wobei
die dotierte Faser mit einem oder mehreren aktiven Elementen dotiert ist, die derart ausgewählt werden, dass die Intensität der Saatimpulse (3) verstärkt wird;
die dotierte Faser eine negative Gruppengeschwindigkeitsdispersion in der Region von der Wellenlänge der Saatimpulse (3) bis zu einer Schwellenwellenlänge aufweist, bei der die Größe der optischen Dämpfung der dotierten Faser größer als eine Verstärkung auf Grund einer stimulierten Raman-Streuung ist, so dass im Gebrauch auf Grund der stimulierten Raman-Streuung die Bildung eines Raman-Solitons erfolgt, das Raman-Soliton in der Wellenlängendomäne weiter verschoben wird, und das Verschieben des Solitons in der Wellenlängendomäne an der Schwellenwellenlänge angehalten wird;
die Faser mit Thulium, Tm, dotiert ist;
die Faser eine negative Gruppengeschwindigkeitsdispersion in der Region von 1, 8 bis 2, 6 µm aufweist;
die Pumpquelle (2) eingerichtet ist, um bei einer Wellenlänge von 0,77 bis 0,82 µm zu pumpen;
die Quelle von Saatimpulsen (3) Impulse bereitstellt, die Wellenlängen von 1,8 bis 2,1 µm aufweisen;
die Dauer der optischen Saatimpulse auf weniger als 100 ps begrenzt ist;
de Schwellenwellenlänge länger als die Wellenlänge der Saatimpulse (3) ist; und
das optische System betriebsfähig ist, um eine Reihe von spektral getrennten Soliton-Impulsen in der Region von der Saatimpulswellenlänge bis 2,6 µm zu generieren.

2. Optisches System nach Anspruch 1, wobei die dotierte Faser eine stark zunehmende optische Dämpfung bei der Schwellenwellenlänge aufweist.

3. Optisches System nach Anspruch 1 oder 2, wobei die Größe der optischen Dämpfung gewählt wird, um die Verstärkung zu überwinden, die auf die stimulierte Raman-Streuung bei der gewünschten Spitzenintensität des Raman-Solitons zurückzuführen ist.

4. Optisches System nach einem der vorhergehenden Ansprüche, das in einem ersten und einem zweiten Modus betriebsfähig ist,
wobei das optische System in dem ersten Modus betriebsfähig ist, um als Ausgabe einen hochenergetischen Impuls, der kürzer als der Saatimpuls ist und den vorherrschenden Teil der Ausgangsverstärkerstrahlung umfasst, ohne spektrales Filtern und spektrales Verschieben in die Richtung längerer Wellenlängen zu generieren,
und wobei das optische System in dem zweiten Modus betriebsfähig ist, um als Ausgabe ein optisches Superkontinuum zu generieren.

5. Optisches System nach Anspruch 4, umfassend einen Controller zum Steuern der Quelle von Saatimpulsen (3), wobei der Controller bevorzugt konfiguriert ist, um mindestens entweder die Dauer oder die Intensität der Saatimpulse (3) zu ändern, um zwischen dem ersten Betriebsmodus und dem zweiten Betriebsmodus zu wechseln.

6. Optisches System nach Anspruch 4 oder 5, ferner umfassend einen Controller zum Steuern der Pumpquelle (2), wobei der Controller konfiguriert ist, um die Pumpleistung zu ändern, um zwischen dem ersten Betriebsmodus und dem zweiten Betriebsmodus zu wechseln.

7. Optisches System nach einem der vorhergehenden Ansprüche, wobei die dotierte Faser mit mindestens einem Element dotiert ist, das eine optische Dämpfung bei der Schwellenwellenlänge erzeugt, oder wobei die Schwellenwellenlänge bereitgestellt wird, indem ein Grundmodus abgeschnitten wird oder Biegeverluste eingeführt werden.

8. Optisches System nach einem der vorhergehenden Ansprüche, wobei die Faser auf Siliziumdioxid basiert.

9. Optisches System nach einem der Ansprüche 1 bis 7, wobei die Faser eine Germanat-Glasfaser oder eine Faser mit einem Germaniumoxidgehalt von mehr als 50 % ist.

10. Optisches System nach Anspruch 1, das in einem ersten Modus betriebsfähig ist, um einen Soliton-Impuls in der Region von 2,2 bis 2,8 µm zu generieren, der den vorherrschenden Teil der Verstärkerausgangsstrahlung umfasst, und das in einem zweiten Modus betriebsfähig ist, um ein Superkontinuum von 1,8 bis 2,6 µm zu generieren, wobei es möglich ist, von einem Betriebsmodus auf einen anderen zu wechseln, indem die Eingangsparameter der Pumpquelle (2) und der Saatimpulse (3) geändert werden.

11. Verfahren zum Betreiben eines optischen Systems, umfassend folgende Schritte:
Bereitstellen eines Faserverstärkers (5), der eine optisch aktive dotierte Faser aufweist;
Säen des Faserverstärkers mit Saatimpulsen (3); und
Pumpen des Faserverstärkers (5); wobei
die dotierte Faser mit einem oder mehreren aktiven Elementen dotiert ist; und die dotierte Faser eine negative Gruppengeschwindigkeitsdispersion in der Region von der Wellenlänge des Saatimpulses bis zu einer erwünschten Schwellenlänge aufweist, so dass im Gebrauch auf Grund einer stimulierten Raman-Streuung eine Bildung eines Raman-Solitons erfolgt, das Raman-Soliton in der Wellenlängendomäne weiter verschoben wird, und das Verschieben des Solitons in der Wellenlängendomäne an der Schwellenwellenlänge angehalten wird, bei der die Größe der optischen Dämpfung der dotierten Faser größer als eine Verstärkung auf Grund der stimulierten Raman-Streuung ist, und wobei
das Bereitstellen des Faserverstärkers (5) darin besteht, einen Thulium-dotierten Faserverstärker bereitzustellen, wobei der Thulium-dotierte Faserverstärker (5) eine negative Gruppengeschwindigkeitsdispersion in der Region von 1,8 bis 2,6 µm aufweist;
das Säen des Faserverstärkers darin besteht, den Thulium-dotierten Faserverstärker mit Saatimpulsen (3) zu säen, welche die Wellenlängen von 1,8 bis 2,1 µm aufweisen;
das Pumpen des Faserverstärkers (5) darin besteht, den Thulium-dotierten Faserverstärker bei beliebigen Wellenlängen von 0,77 bis 0,82 µm zu pumpen;
die Dauer der optischen Saatimpulse auf weniger als 100 ps eingeschränkt ist;
die Schwellenwellenlänge länger als die Wellenlänge der Saatimpulse (3) ist; und
das optische System betriebsfähig ist, um eine Reihe von spektral getrennten Soliton-Impulsen in der Region von der Saatimpulswellenlänge bis 2,6 µm zu generieren.

12. Verfahren nach Anspruch 11, umfassend das Generieren eines Soliton-Impulses mit einer Wellenlänge von 2,2 bis 2,5 µm, so dass der generierte Soliton-Impuls den vorherrschenden Teil der Verstärkerausgangsenergie trägt; und bevorzugt umfassend das Generieren der Reihe von spektral getrennten Soliton-Impulsen in der Spektralregion von der Saatimpulswellenlänge bis 2,6 µm.

13. Verfahren nach Anspruch 11, umfassend das Generieren einer Superkontinuum-Strahlung, welche die Region von 1,8 bis 2,6 µm abdeckt.

14. Verfahren nach Anspruch 11, umfassend das Generieren der Reihe von spektral getrennten Soliton-Impulsen in der Spektralregion von der Saatimpulswellenlänge bis 2,6 µm in einem ersten Betriebsmodus, und in einem zweiten Betriebsmodus, das Generieren einer Superkontinuum-Strahlung, welche die Region von 1,8 bis 2,6 µm abdeckt; wobei bevorzugt in dem ersten Betriebsmodus die Reihe aus mindestens einem Soliton-Impuls in der Region von 2,2 bis 2,5 µm besteht, der den vorherrschenden Teil der Verstärkerausgangsenergie trägt; und/oder wobei bevorzugt der Betriebsmodus zwischen den beiden Modi durch Ändern der Eingangsparameter des Pumpens und des Säens gewechselt wird.

## Revendications

1. Système optique comprenant :
un amplificateur de fibre (5) comprenant une fibre dopée active d'un point de vue optique ;
une source d'impulsions initiales (3) ; et
une source de pompage (2), dans lequel
la fibre dopée est dopée avec un ou plusieurs éléments actifs sélectionnés de sorte que les impulsions initiales (3) sont amplifiées en intensité ;
la fibre dopée a une dispersion négative de vitesse de groupe dans la région allant de la longueur d'onde des impulsions initiales (3) jusqu'à une longueur d'onde de seuil à laquelle l'amplitude de la perte optique de la fibre dopée est plus grande qu'un gain dû à une diffusion de Raman stimulée, de sorte qu'en fonctionnement en raison de la diffusion de Raman stimulée, la formation d'un soliton de Raman se produit, le soliton de Raman est en outre décalé dans le domaine de longueur d'onde, et le décalage du soliton dans le domaine de longueur d'onde est stoppé à la longueur d'onde de seuil ;
la fibre est dopée avec du thulium Tm,
la fibre a une dispersion négative de vitesse de groupe dans la région de 1,8 à 2,6 µm ;
la source de pompage (2) est agencée pour pomper à une longueur d'onde allant de 0,77 à 0,82 µm ;
la source d'impulsions initiales (3) fournit des impulsions ayant des longueurs d'onde allant de 1,8 à 2,1 µm ;
la durée des impulsions optiques initiales est limitée à moins de 100 ps ;
la longueur d'onde de seuil est plus longue que la longueur d'onde des impulsions initiales (3) ; et
le système optique peut être mis en œuvre pour produire une série d'impulsions de soliton séparées d'un point de vue spectral dans la région allant de la longueur d'onde d'impulsion initiale à 2,6 µm.

2. Système optique selon la revendication 1, dans lequel la fibre dopée a une perte optique augmentant rapidement à la longueur d'onde de seuil.

3. Système optique selon la revendication 1 ou 2, dans lequel l'amplitude de ladite perte optique est choisie pour surmonter le gain dû à une diffusion de Raman stimulée à l'intensité maximale souhaitée du soliton de Raman.

4. Système optique selon l'une quelconque des revendications précédentes, pouvant être mis en œuvre dans un premier et un second mode,
dans lequel dans le premier mode le système optique peut être mis en œuvre pour produire en tant que sa sortie une impulsion de haute énergie plus courte que l'impulsion initiale et comprenant la partie prédominante du rayonnement d'amplificateur de sortie sans filtrage spectral et décalé d'un point de vue spectral vers la direction de longueur d'onde plus longue,
et dans lequel dans le second mode le système optique peut être mis en œuvre pour produire en tant que sa sortie un supercontinuum optique.

5. Système optique selon la revendication 4, comprenant une unité de commande pour commander la source d'impulsions initiales (3), de préférence dans lequel l'unité de commande est configurée pour changer au moins l'une de la durée ou de l'intensité des impulsions initiales (3) afin de changer entre le premier mode opérationnel et le second mode opérationnel.

6. Système optique selon la revendication 4 ou 5, comprenant en outre une unité de commande pour commander la source de pompage (2), dans lequel l'unité de commande est configurée pour changer le débit de pompage pour changer entre le premier mode opérationnel et le second mode opérationnel.

7. Système optique selon l'une quelconque des revendications précédentes, dans lequel la fibre dopée est dopée avec au moins un élément produisant une perte optique à la longueur d'onde de seuil, ou dans lequel la longueur d'onde de seuil est fournie en coupant un mode fondamental ou en introduisant des pertes de courbures.

8. Système optique selon l'une quelconque des revendications précédentes, dans lequel la fibre est à base de silice.

9. Système optique selon l'une quelconque des revendications 1 à 7, dans lequel la fibre est une fibre de verre de germanate ou une fibre avec une teneur en oxyde de germanium supérieure à 50 %.

10. Système optique selon la revendication 1, pouvant être mis en œuvredans un premier mode pour produire une impulsion de soliton dans la région de 2,2 à 2,8 µm comprenant la partie prédominante du rayonnement de sortie d'amplificateur et dans un second mode pour produire un rayonnement de supercontinuum de 1,8 à 2,6 µm, dans lequel il est possible de changer d'un mode opérationnel particulier à un autre en changeant les paramètres d'entrée de la source de pompage (2) et des impulsions initiales (3).

11. Procédé de mise en œuvre d'un système optique comprenant :
la fourniture d'un amplificateur de fibre (5) ayant une fibre dopée active d'un point de vue optique ;
l'initialisation de l'amplificateur de fibre avec des impulsions initiales (3) ; et
le pompage de l'amplificateur de fibre (5) ; dans lequel
la fibre dopée est dopée avec un ou plusieurs élément(s) actif(s) ; et la fibre dopée a une dispersion négative de vitesse de groupe dans la région allant de la longueur d'onde de l'impulsion initiale à une longueur d'onde de seuil souhaitable, de sorte qu'en fonctionnement en raison d'une diffusion de Raman stimulée, la formation d'un soliton de Raman se produit, le soliton de Raman est en outre décalé dans le domaine de longueur d'onde, et le décalage du soliton dans le domaine de longueur d'onde est stoppé à la longueur d'onde de seuil à laquelle l'amplitude de la perte optique de la fibre dopée est plus grande qu'un gain dû à la diffusion de Raman stimulée, et dans lequel
la fourniture de l'amplificateur de fibre (5) est la fourniture d'un amplificateur de fibre dopée au thulium, l'amplificateur de fibre dopée au thulium (5) ayant une dispersion négative de vitesse de groupe dans la région de 1,8 à 2,6 µm ;
l'initialisation de l'amplificateur de fibre est l'initialisation de l'amplificateur de fibre dopée au thulium avec des impulsions initiales (3) ayant des longueurs d'onde de 1,8 à 2,1 µm ;
le pompage de l'amplificateur de fibre (5) est le pompage de l'amplificateur de fibre dopée au thulium à n'importe quelles longueurs d'onde allant de 0,77 à 0,82 µm ;
la durée des impulsions optiques initiales est limitée à moins de 100 ps ;
la longueur d'onde de seuil est plus longue que la longueur d'onde des impulsions initiales (3) ; et
le système optique peut être mis en œuvre pour produire une série d'impulsions de soliton séparées d'un point de vue spectral dans la région allant de la longueur d'onde d'impulsion initiale à 2,6 µm.

12. Procédé selon la revendication 11 comprenant la production d'une impulsion de soliton avec une longueur d'onde de 2,2 à 2,5 µm, de sorte que l'impulsion de soliton produite porte la partie prédominante de la puissance de sortie d'amplificateur; et comprenant de préférence la production de la série d'impulsions de soliton séparées d'un point de vue spectral dans la région spectrale allant de la longueur d'onde d'impulsion initiale à 2,6 µm.

13. Procédé selon la revendication 11, comprenant la production d'un rayonnement de supercontinuum couvrant la région de 1,8 à 2,6 µm.

14. Procédé selon la revendication 11, comprenant la production de la série d'impulsions de soliton séparées d'un point de vue spectral dans la région spectrale allant de la longueur d'onde d'impulsion initiale à 2,6 µm dans un premier mode de mise en œuvre, et dans un second mode de mise en œuvre, la production d'un rayonnement de supercontinuum couvrant la région de 1,8 à 2,6 µm ; de préférence dans lequel dans le premier mode de mise en œuvre, la série consiste en au moins une impulsion de soliton dans la région de 2,2 à 2,5 µm portant la partie prédominante de la puissance de sortie d'amplificateur; et/ou de préférence dans lequel le mode opérationnel est changé entre les deux modes par changement des paramètres d'entrée de pompage et initiaux.
